# EUROPÄISCHE PATENTSCHRIFT

(11) **EP 1 058 626 B1**
(45) Veröffentlichungstag und Bekanntmachung des Hinweises auf die Patenterteilung: **12.12.2001**
(21) Anmeldenummer: 99904682.4
(22) Anmeldetag: 02.03.1999
(51) Int. Cl.: B60K 15/03

(54) **TREIBSTOFFTANK MIT INTEGRIERTEM HITZESCHILD**
FUEL TANK WITH INTEGRATED HEAT SHIELD
RESERVOIR DE CARBURANT A ECRAN THERMIQUE INTEGRE

(30) Priorität: 04.03.1998 US 76834 P
(43) Veröffentlichungstag der Anmeldung: 13.12.2000
(73) Patentinhaber: RIETER AUTOMOTIVE (INTERNATIONAL) AG, CH-8702 Zollikon (CH)
(72) Erfinder: BUTLER, Richard, Martin, Canton, MI 48188 (US)
(74) Vertreter: Ritscher, Thomas, Dr.
(86) Internationale Anmeldenummer: CH9900096
(87) Internationale Veröffentlichungsnummer: WO9944851

(56) Entgegenhaltungen:
- US-A- 5 567 296
- US-A- 5 656 353
- US-A- 5 674 603

## Beschreibung

Die vorliegende Erfindung betrifft blasgeformte Treibstofftanks für Fahrzeuge im allgemeinen, und Treibstofftanks mit einem Hitzeschild im besonderen. Darüber hinaus bezieht sich die vorliegende Erfindung auf ein Blasformverfahren zur Herstellung eines Treibstofftanks mit einem integrierten Hitzeschild.

Heutzutage werden Treibstofftanks für Kraftfahrzeuge in der Regel durch das Blasformverfahren unter Verwendung von Niederdruck-Polyethylen, d.h. Polyethylen hoher Dichte (High Density Polyethylene, HDPE) hergestellt. Die Verwendung dieser Art von Kunststoffmaterial führt zu haltbaren und soliden Treibstofftanks, welche darüber hinaus korrosionsbeständig sind und in einfacher und günstiger Weise selbst unter Einhaltung sehr genauer Spezifikationen hergestellt werden können. Derartige aus diesem Material gefertigte Treibstofftanks besitzen jedoch den Nachteil, einen relativ niedrigen Schmelzpunkt zu besitzen. So ist die Schmelztemperatur dieses Materials tief genug, dass die Hitze des Auspuffrohrs resp. der Abgasanlage des Kraftfahrzeuges leicht ein Loch in den Tank brennen oder sich in anderer Weise nachteilig auf diesen auswirken könnte.

Für einen aus diesem Material gefertigten Treibstofftank, welcher sich in der Nähe der Abgasanlage resp. von Auspuffrohren befindet, ist es daher notwendig, ein Hitzeschild zwischen dem Treibstofftank und der Abgasanlage zu installieren. Der Stand der Technik offenbart zahlreiche Verfahren zur Anordnung eines Hitzeschildes in einer geeigneten Position resp. an einer geeigneten Stelle, um Treibstofftanks vor der Wärme von Abgasanlagen zu schützen. So wird das Montieren eines Hitzeschildes im Bereich des Fahrzeugbodens ohne direkten Kontakt zu einem Treibstofftank, als auch das Befestigen eines Hitzeschildes an einen Tank selbst, beschrieben. Hitzeschilde dieser Art sind typischerweise Presslinge aus Stahl, SMC-Formmassen resp. Duroplaste, oder hitzebeständige Verbundwerkstoffe. Derartige zum Schutz von Treibstofftanks verwendete Hitzeschilde erfordern jedoch längere Produktionszeiten, zusätzliche Einrichtearbeit und zusätzliches Material resp. Teile mit der damit verbundenen Zunahme der Kosten. Darüber hinaus zeigt die Praxis, dass sich derartige Hitzeschilde im Laufe der Lebenszeit des Fahrzeugs infolge von Korrosion, Einwirkungen von losem Strassenbelag, wie Schotter oder Kieselsteinen, und Stössen aufgrund schlechtem Strassenzustand oder Unebenheiten ablösen können. Beispiele dieser Hitzeschilde sind in der US 4'930'811 und der US 4'909'530, sowie in der US 5'656'353 als Schutz für einen Fahrzeugmotor beschrieben.

Ein Beispiel eines direkt an einen Treibstofftank befestigten Hitzeschildes ist in der US 5'193'262 offenbart. Ein anderes Beispiel der direkten Befestigung eines Hitzeschildes an einen Treibstofftank ist in den drei Patentschriften US 5'188'981, US 5'308'571 und US 5'674'603 beschrieben, in welchen ein Hitzeschild im Zuge des Formprozesses auf die Aussenseite eines Tanks angebracht und mit diesem integriert wird. Ein weiteres Beispiel eines integrierten Hitzeschildes ist in der US 5'129'544 offengelegt, in welchem eine sehr dünne Metallfolie, bspw. aus Aluminium, durch Hitze und Druck unter Hinzugabe eines Haftvermittlers zwischen einer äusseren Kunststoffschicht und einer inneren Kunststoffschicht gebunden wird.

Der Stand der Technik beschreibt zwei Arten resp. Typen von Hitzeschilde, welche zusammen in einem Laminat vereint und mit dem Tank integriert sein können. So kennt der Fachmann den reflektierenden Typ, bei welchem ein reflektierendes Metall wie Aluminium verwendet wird und einen isolierenden Typ, der bspw. einen polymeren Schaum oder einen Kunststoff verwendet. In einigen Beispielen des Standes der Technik, wie z. B. in den zuvor genannten drei US-Patentschriften,

US 5'188'981, US 5'308'571 und US 5'674'603, besteht das Laminat aus einer Metallfolie mit einer Dicke von ungefähr 1 bis 2 mils (1 mil = 25.4 *µ*m), und einer Schicht aus einem nicht porösen isolierenden Materials und einer Schicht aus einem porösen isolierenden Materials. Diese Laminatschichten sind chemisch miteinander verbunden. In der US 5'567'296 und US 5'547'096, ist die äussere reflektierende Schicht ein elektrochemisch aufgebrachtes Metall.

Obwohl ein Treibstofftank mit integriertem Hitzeschild, wie bspw. in den genannten US 5'188'981, US 5'308'571 und US 5'674'603, die beste Lösung zu sein scheint, zeigt die Praxis, dass die Laminatschichten des Hitzeschildes derartiger Treibstofftanks dazu neigen, im Laufe der Zeit infolge von durch Hitze, Chemikalien und/oder Vibrationen verursachten Verschleiss abzublättern resp. abzubröckeln oder sich vollständig abzulösen. Insbesondere zeigt die Praxis, dass es schwierig ist, die äussere Metallfolie an die inneren isolierenden Schichten zu binden.

Die US 5,674,603 wird im folgenden als nächstliegender Stand der Technik betrachtet und für die Formulierung des gattungsbildenden Oberbegriffs der unabhängigen Ansprüche 1 und 9 verwendet.

In den Ausführungsbeispielen des Standes der Technik, in welchen ein elektrochemisch aufgebrachtes Metall angewendet wird, besteht darüber hinaus die Schwierigkeit, eine Schicht mit einer ausreichenden Dicke zu einem wirtschaftlichen Preis zu erhalten. Desweiteren zeigt die Praxis, dass derartig gefertigte Schichten zu Abriebverlusten neigen.

Infolgedessen besteht ein Bedarf für einen kostengünstigen, leicht herstellbaren, in einfacher Weise formbaren und dauerhaften resp. abnutzungsfesten Treibstofftank, welcher sich, ohne Schaden zu nehmen, nahe der Auspuffanlage des Kraftfahrzeuges befinden resp. angeordnet werden kann.

Es ist eine weitere Aufgabe der vorliegenden Erfindung ein Treibstofftank zu schaffen, welcher ein integriertes Hitzeschild aufweist. Insbesondere soll ein Treibstofftank geschaffen werden, dessen integriertes Hitzeschild nicht abblättert, abbrökelt oder sich gar vollständig vom Tank ablöst, sondern dessen Hitzeschild dauerhaft im Tank integriert ist und fest und abschliessend an den Tank gebunden ist.

Es ist eine weitere Aufgabe der vorliegenden Erfindung, ein Verfahren zu schaffen, mit welchem kostengünstig, in einfacher Weise und mit geringem Zeitaufwand Treibstofftanks mit integriertem Hitzeschild hergestellt werden kann. Insbesondere soll ein Verfahren geschaffen werden, mit welchem schnell, billig eine dauerhafte und aüsserst wirksame integrative Bindung des Hitzeschildes an den Treibstofftank erzielt wird.

Die vorliegende Erfindung liefert eine Lösung zu den genannten Nachteilen des Standes der Technik, indem sie sich der Vorteile des Blasformverfahrens zur Herstellung des Treibstofftanks bedient, während sie zur gleichen Zeit ein vielseitig verwendbares, in einfacher Weise positionierbares, dauerhaft resp. abnutzungsfest integriertes, und leicht herstellbares Hitzeschild bereitstellt. Darüber hinaus nutzt die vorliegende Erfindung die Vorteile, welche mit der Verwendung eines relativ dicken metallischen Hitzeschildes als integrativen Bestandteil eines blasgeformten Treibstofftankes verbunden sind. Desweiteren nutzt die vorliegende Erfindung die Vorteile, welche mit einem metallischen Hitzeschild verbunden sind, das direkt in die Wandung des Treibstofftanks an jeder gewünschten Stelle eingegossen wird.

In einem bevorzugten Verfahren zur Herstellung eines Treibstofftanks gemäss der vorliegenden Erfindung, wird ein relativ dickes metallisches Blech in der Weise perforiert, dass eine Vielzahl von Protrusionen/Durchbrüchen in Form von Krallen resp. Widerhaken entsteht, und wird dieses Blech in eine gewünschte Konfiguration resp. Gestalt vorgeformt.

Daraufhin werden das geformte metallische Blech und ein Vorformling in einer zum Blasformen geeigneten und geöffneten Form angeordnet. Nach dem Schliessen der Form wird der Formenhohlraum geheizt und ein unter Überdruck stehendes Fluid in das Innere des Vorformlings in der Weise eingeleitet, dass dieser sich ausweitet und in Kontakt mit den Innenwänden der Form kommt, und das angeordnete perforierte und geformte metallische Blech in die Wandung des Vorformlings gedrückt resp. gepresst wird. Die Form wird daraufhin geöffnet und der fertiggestellte Treibstofftank mit eingebettetem Hitzeschild aus der Form entnommen. Ein Treibstofftank gemäss vorliegender Erfindung umfasst ein perforiertes, geformtes, metallisches Blech, dessen Protrusionen direkt in die Wandung des Tanks eingegossen sind, und welches Blech sich - bei montiertem Tank - nahe einer Hitzequelle wie bspw. Bestandteile der Abgasanlage befindet.

Die vorliegende Erfindung besitzt weitere Vorteile: So ist ein Hitzeschild dauerhaft und fest an die Aussenseite der Wandung des Tanks gebunden. Darüber hinaus sind weder Montage resp. ein Zusammenbau noch zusätzliche oder nachträgliche Arbeitsschritte erforderlich. Desweiteren kann eine genaue und präzise Positionierung des Hitzeschildes erreicht werden. Vorteilhafterweise ist kein erhöhter Zeitbedarf während der Verwendung der zum Blasformen geeigneten Form nötig, sondern lediglich die sogenannte "in-mold"-Zeit, die bei der Herstellung eines adäquaten Treibstofftanks ohne integriertem Hitzeschild benötigt wird. Ein weiterer Vorteil besteht darin, dass das vorgeformte Hitzeschild so konfiguriert werden kann, dass es sich jeder Kontur beim Blasformen des dreidimensionalen Tankkörpers anpasst.

Nach einem erfindungsgemässen Ausführungsbeispiel wird ein blasgeformter Treibstofftank für ein Kraftfahrzeug geschaffen, welcher einen Behälter und ein Hitzeschild umfasst. Der Behälter weist mindestens eine Wandung auf und ist aus einem zum Blasformen geeigneten, thermoformbaren, polymeren Kunststoff hergestellt. Das Hitzeschild ist mindestens auf einer der Wandungen angebracht und darin integriert. Das Hitzeschild ist als dreidimensionaler Körper mit einer ersten Seite und einer zweiten Seite ausgebildet und weist eine Vielzahl von Perforationen auf. Die Perforationsdichte beträgt normalerweise ca. 50 Perforationen pro 10 cm². Diese Perforationen werden alle von derselben Seite erzeugt, so dass sich alle Krallen auf der anderen Seite des Hitzeschildes bilden. Beim fertigen Treibstofftank erstreckt sich durch jede Perforation ein aus dem Kunststoff des Behälters bestehender Zapfen. Die Kralle ist in die Wandung des Behälters derart eingebettet, dass das Hitzeschild mit dem Behälter integriert ist.

In einer bevorzugten Ausführungsform der vorliegenden Erfindung wird ein Verfahren zur Herstellung eines Treibstofftanks mit einem Behälter und einem Hitzeschild geschaffen. Hierbei ist der Behälter durch mindestens eine Wand definiert, welche Wand eine Innen- und eine Aussenseite hat. Das Hitzeschild ist in die Aussenseite der Wand eingebettet. Im ersten Schritt des Verfahrens wird ein Metallblech mit einer Dicke von zwischen 0.1 mm und 0.3 mm bereitgestellt und wird eine Vielzahl von Perforationen in das Metallblech von derselben Seite eingeformt derart, dass sich auf der anderen Seite des Metallblechs protrusionsartige Krallen bilden. Das Metallblech wird als dreidimensionale Form gestaltet und dann in einen Hohlraum einer Blasform mit Innenwänden angeordnet, welche Innenwände die äussere Form eines zu blasformenden Treibstofftank definieren. Das Metallblech ist derart angeordnet, dass sich dessen Krallen in den Hohlraum der Blasform erstrecken. Ein Vorformling mit einem inneren Hohlraum wird dann im Hohlraum der Blasform angeordnet. Ein unter Überdruck stehendes Fluid wird in den inneren Hohlraum des Vorformlings eingeleitet. Das Fluid steht ausreichend unter Druck, um den Vorformling in Kontakt mit dem Hohlraum der Blasform und in Kontakt mit dem metallischen Blech und seinen Krallen zu bringen, in der Weise, dass sich der Kunststoff um die Krallen der Perforationen legt und insbesondere durch die Protrusionen ragt. Hierdurch wird das Metallblech integrativ an den Kunststoff des Tankkörpers befestigt. Der erweiterte resp. vergrösserte Vorformling wird dann gehärtet und der gefertigte blasgeformte Treibstofftank mit einem integrierten metallischen Hitzeschild aus dem Hohlraum der Blasform entfernt.

Es versteht sich, dass der blasgeformte Treibstofftank aus mehreren Schichten aufgebaut sein kann.

Nachfolgend soll die Erfindung anhand der Figuren näher erläutert werden. Dabei zeigt:
- Fig. 1: eine Querschnittsansicht eines erfindungsgemässen Treibstofftanks, welcher sich nahe einem Auspuffrohr einer Fahrzeugabgasanlage befindet;
- Fig. 2: eine vergrösserte Querschnittsansicht eines erfindungsgemässen perforierten metallischen Hitzeschildes, welches in die Wandung eines blasgeformten Treibstofftanks eingebettet ist (die Perforationen im Hitzeschild sind grösser und in geringerer Anzahl als in einer massstabsgerechten Figur dargestellt);
- Fig. 3: eine vergrösserte, schematische und perspektivische Ansicht einer rechtwinkligen Perforation, wobei nur eine der vier durch das Perforationsverfahren erzeugten Krallen dargestellt ist (weitere Details und Teile sind aus Gründen der Übersichtlichkeit weggelassen);
- Fig. 4: eine schematische Querschnittsansicht einer geöffneten und zum Blasformen geeigneten Form mit einem eingesetzten Vorformling und einem erfindungsgemässen perforierten Hitzeschild, welches an einem Teilabschnitt der Form angeordnet ist;
- Fig. 5: eine schematische Querschnittsansicht der zum Blasformen geeigneten Form nach Fig. 4 in der geschlossenen Position, bevor ein unter Überdruck stehendes Fluid in das Innere des Vorformlings eingeleitet wird;
- Fig. 6: eine schematische Querschnittsansicht der zum Blasformen geeigneten Form nach Fig. 5, nachdem ein unter Überdruck stehendes Fluid eingeleitet wurde; und
- Fig. 7: eine schematische Querschnittsansicht der geöffneten, zum Blasformen geeigneten Form nach Fig. 6, nachdem der Vorgang zum Blasformen abgeschlossen wurde und ein fertiggestellter Treibstofftank mit eingebettetem Hitzeschild hergestellt wurde.

In den Figuren sind gleiche Teile mit gleichen Bezugszeichen gekennzeichnet.

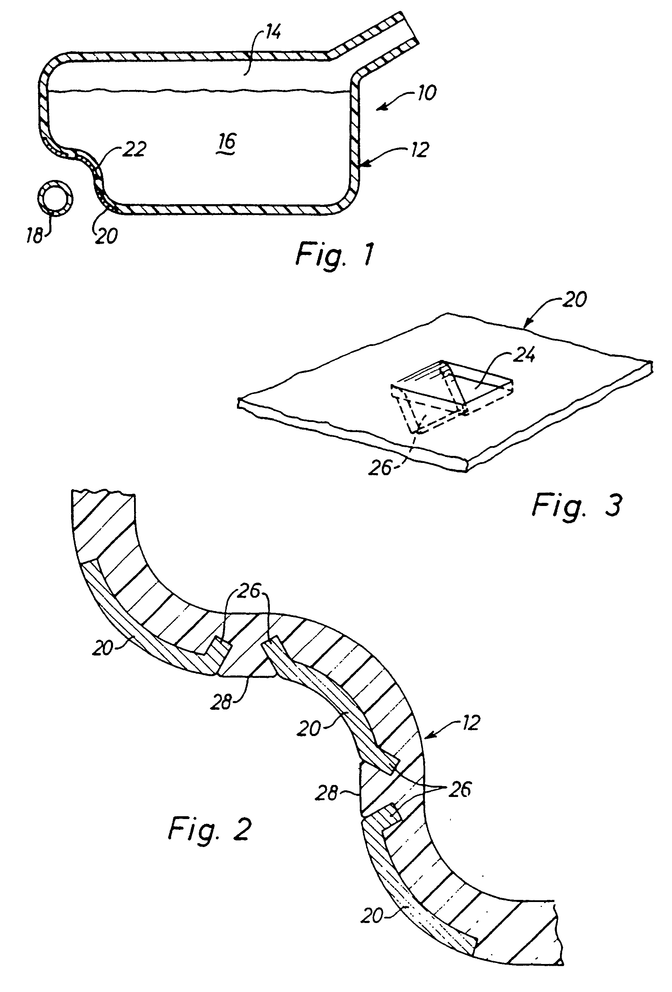

Im folgenden soll auf die Figuren 1-3 Bezug genommen werden. In Fig. 1 ist im Querschnitt ein blasgeformter Treibstofftank 10 mit einer Wandung 12 und einem inneren Hohlraum 14 dargestellt. Die Gestalt der Wandung 12 ist durch die für das Blasformverfahren verwendete Form definiert. Der Tank 10 ist aus einem herkömmlichen thermoformbaren Kunststoff, wie bspw. Polypropylen oder Polyethylen resp. einer ihrer Derivate, hergestellt. Wie in Fig.1 dargestellt, ist der Tank 10 vorgesehen, einen flüssigen Treibstoff 16, wie bspw. Benzin aufzunehmen.

Vorzugsweise ist die Tankwandung 12 ein Laminat aus einem mehrschichtigen Isolator und einem Hitzeschild (nicht dargestellt).

Auf der linken Seite des Tanks 10, wie in Fig. 1 ersichtlich, befindet sich ein Auspuffrohr 18, welches Teil einer Abgasanlage eines Kraftfahrzeuges ist. Aufgrund der extrem hohen Temperaturen der Auspuffgase wird das Auspuffrohr 18 sehr heiss, so dass der Kunststoff des Tanks 10 schmelzen oder degradieren könnte.

Zum Schutz vor der von der Abgasanlage erzeugten Hitze wird ein Hitzeschild 20 an die äussere Seite der Wandung 12 angebracht. Wie in Fig. 1 gezeigt, hat die Wandung 12 eine Einbuchtung 22 im Bereich des Auspuffrohrs 18, damit die Abgasrohrleitung des Kraftfahrzeuges in geeigneter Weise verlegt und verlaufen kann. Das Hitzeschild 20 ist derart gestaltet resp. geformt, dass es sich an die Einbuchtung 22 anpasst.

In einer bevorzugten Ausführungsform umfasst das Hitzeschild 20 ein stark hitzereflektierendes, stabiles Material, wie beispielsweise Metall. Geeignete Metalle umfassen Aluminium, rostfreien Stahl und beschichteten und polierten, kohlenstoffarmen Stahl. Das Hitzeschild 20 besteht vorzugsweise aus einem dünnen Blech des Metalls mit einer Dicke von ca. 0.1 mm bis 0.3 mm und weist eine Vielzahl eckiger, insbesondere rechtwinkliger Perforationen 24 auf (vgl. Fig. 3). Die Perforationen 24 werden durch herkömmliche Perforationsroller (nicht dargestellt) hergestellt, welche über eine Vielzahl von Lochstanzer resp. Stanzstempel verfügen, welche eine Spitze und einen meisselartigen, eckigen Querschnitt, welcher gerade überhalb der Spitze beginnt, aufweisen. Als Folge der in das Metallblech penetrierenden Lochstanzer werden eine Vielzahl von Krallen 26 (im allgemeinen zwei) auf nur einer Seite des Hitzeschildes 20 gebildet, wie in Fig. 2 ersichtlich. Bevorzugte Perforationen weisen eine Länge von ca. 2 mm und eine Breite von ca. 1 mm auf und werden mit einer Dichte von ca. 50 Perforationen pro 10 cm² aufgebracht. Als Folge beträgt dann die Länge der Krallen 26 ca. 1 mm. Das Material der Tankwand penetriert im Verlauf des erfindungsgemässen Verfahrens in die Protrusionen unter Bildung von Zapfen 28. Die Kombination von sehr gutem Penetrationsvermögen des während des Blasformens sehr weichen Kunstoffmaterials und der Gestalt der Krallen 26 führt zu einer sehr guten mechanischen Befestigung des Hitzeschildes 20 am Tank 10. Wie in Fig. 2 ersichtlich, sorgt die Gestalt resp. Form der erfindungsgemässen Krallen 26 dafür, dass die Zapfen 28 und damit die Tankwandung 12 in idealer Weise die Krallen 26 hintergreifen können und damit das Hitzeschild mit der Wandung formschlüssig verbunden werden kann.

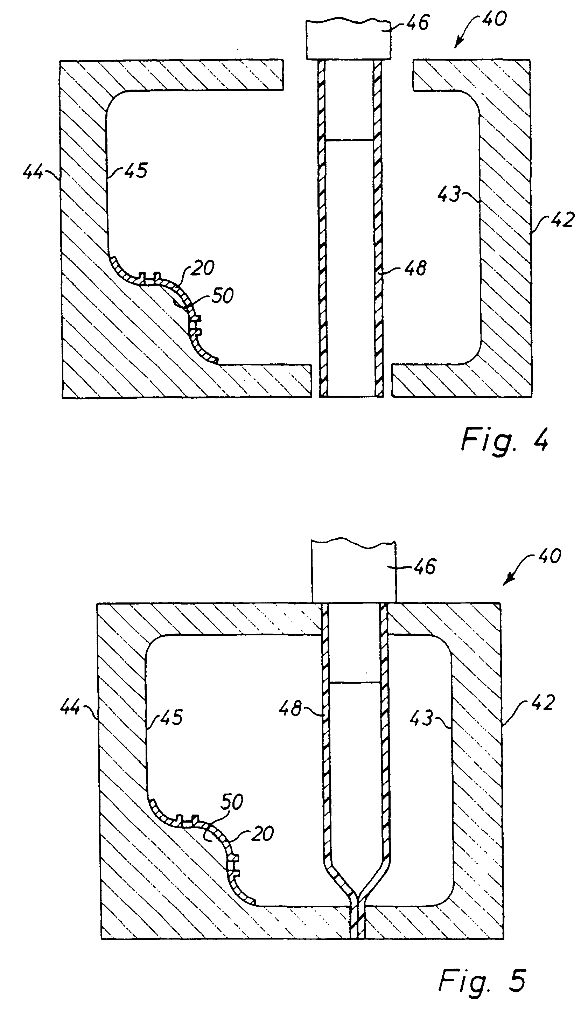

Mit Bezug auf die Figuren 4 - 7 soll das Verfahren zur Herstellung des Treibstofftanks 10 beschrieben werden. Vorab soll angemerkt werden, dass aus Gründen der Übersichtlichkeit die Protrusionen im Hitzeschild grösser und in geringerer Anzahl als in einer massstabsgetreuen Figur dargestellt sind. Eine Form 40 ist in Fig. 4 in der geöffneten Position dargestellt und besteht aus einer ersten Halbform 42 mit einer ersten inneren Wand 43 und einer zweiten Halbform 44 mit einer zweiten inneren Wand 45. Die inneren Wände 43 und 45 bilden eine Kammer, wenn die Formhälften 42 und 44 geschlossen sind. Wie in Fig. 5 dargestellt, ist an den Randbereichen der Formhälften 42 und 44 und in Verlängerung der Trennebene der Form 40 ein Extruder 46 angeordnet, welcher einen hohlen Vorformling 48 extrudiert hat. Eine Wölbung 50 in der zweiten Formhälfte 44 erzeugt in dem fertiggestellten Tank 10 die Einbuchtung 22. Nachdem das metallische Hitzeschild 20 perforiert und teilweise oder gar vollständig in seine endgültige Gestalt geformt wurde, wird das Hitzeschild 20 auf der Wölbung 50 angeordnet. Das Hitzeschild 20 kann bspw. durch die Anwendung von Vakuum mit Hilfe von Bohrlöchern in der Wölbung 50, durch ein Haftmittel, welches durch Hitze seine Haftwirkung verliert (nicht dargestellt) oder durch ein metallisches Band (nicht dargestellt) oder mittels jedem anderen herkömmlichen Mittel, dessen Haftwirkung in einfacher Weise wieder aufgehoben werden kann, in der gewünschten Position gehalten werden.

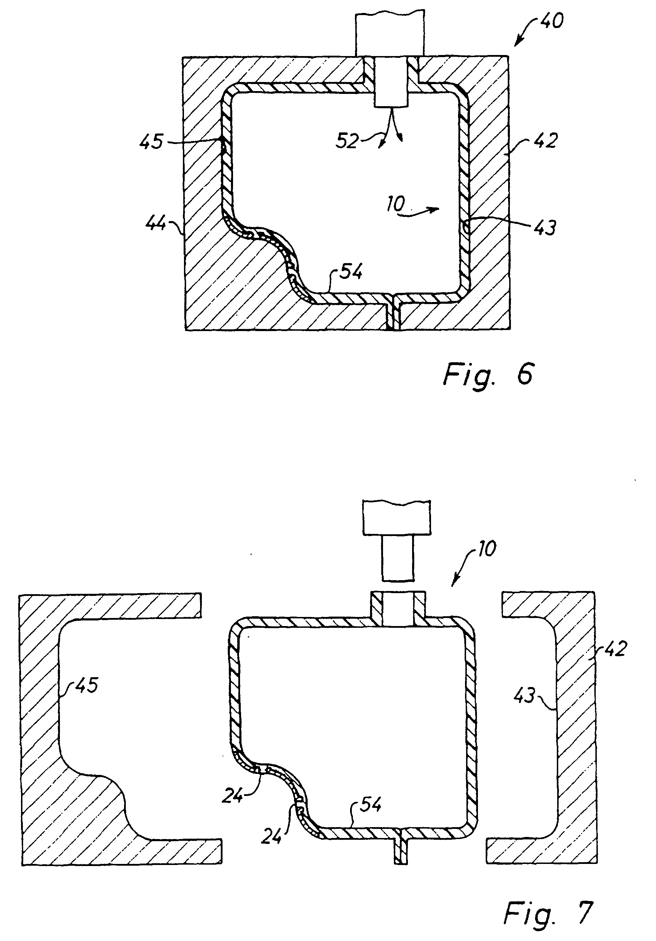

In Fig. 5 ist die Form 40 in geschlossenem Zustand dargestellt. Durch Schliessen der Form 40 wurde der untere Teil resp. Boden des Vorformlings 48 durch die Unterkanten der Formhälften 42 und 44 zusammendrückt resp. abgeschnürt und somit dicht verschlossen. In Fig. 6 wird ein unter Überdruck stehendes Fluid 52 in den Vorformling 48 in einer dem Fachmann hinlänglich bekannten Weise eingespeist. Das Fluid 52 ist in der Regel ein erhitztes Gas. Leitet man ein verdichtetes Gas in den inneren Hohlraum des Vorformlings 48, so vergrössert sich der Vorformling. Er wird gegen die inneren Wände 43 und 45 der Formhälften 42 und 44 gedrückt, und trifft auf die Seite des Hitzeschildes 20, welche mit den krallenförmigen Protrusionen 26 versehen ist. Das Material des Vorformlings 48 expandiert durch die einzelnen Protrusionen, wodurch sich Zapfen 28 in jeder Protrusion bilden. Als Folge der Hitze und des Drucks erstarrt der Kunststoff des Vorformlings unter Bildung eines festen resp. steifen Tanks 10 mit einer äusseren Wandung 54, deren Gestalt durch die Form der Innenwände 43 und 45 der Formhälften 42 und 44 bestimmt ist. So werden die nach innen ragenden Krallen 26 vom Kunststoff umgeben und formschlüssig in die Tankwandung 54 integriert.

Ein Treibstofftank und ein Blasformverfahren zur Herstellung eines Treibstofftanks wurde in Übereinstimmung mit einem bevorzugten Ausführungsbeispiel der Erfindung beschrieben. Der Treibstofftank hat ein integriertes Hitzeschild, um den Tank vor in seiner Nähe lokalisierter Hitze resp. Hitzequellen zu schützen, wie bspw. vor einer Abgasanlage eines Kraftfahrzeuges. Das Hitzeschild umfasst eine metallische Schicht mit einer Vielzahl von Protrusionen, wobei jede dieser Protrusionen eine Vielzahl von Krallen als Folge des Perforationsprozesses aufweist. Alle diese Protrusionen befinden sich auf der selben Seite des Hitzeschildes. Das Hitzeschild wird gleichzeitig mit dem Blasformen des Tanks in die Kunststoffwandung des Treibstofftanks in der Art eingebettet, dass dieses vollständig in den Tank integriert ist. Neben den geringeren Kosten, der erhöhten Verlässlichkeit und den verkürzten Herstellungszeiten weist die vorliegende Erfindung den Vorteil auf, Treibstofftanks mit integriertem Hitzeschild zu schaffen, welche verschiedenartigste und beliebig geformte Konturen aufweisen können. So kann in einfacher Weise der erfindungsgemässe Treibstofftank modifiziert werden, um in Autos und Lastwagen, aber auch für Wasserfahrzeuge oder Motorräder Verwendung zu finden.

Obwohl hier bevorzugte Ausführungsbeispiele der Erfindung beschrieben werden, ist es für Fachleute auf dem Gebiet der Erfindung offensichtlich, dass Veränderungen und Modifikationen der beschriebenen Ausführungsbeispiele durchgeführt werden können, ohne sich vom Wesen und Zweck der Erfindung zu entfernen. So versteht es sich, dass es keinerlei erfinderisches Dazutun bedarf, dem Fachmann bekannte Mehrschichtsysteme mit isolierenden und reflektierenden Schichten als Hitzeschild Erfindung einzusetzen. Die Modifizierung derartiger Mehrschichtsysteme unter Ausbildung der erfindungsgemässen Krallen kann mit bekannten Verfahren erreicht werden.

## Patentansprüche

1. Blasgeformter Treibstofftank für ein Kraftfahrzeug, wobei der Treibstofftank (10) einen Behälter und ein Hitzeschild (20) umfasst, wobei der Behälter eine Wandung (12) aufweist, die aus einem zum Blasformen geeigneten, thermoformbaren, polymeren Kunststoff hergestellt ist, und das Hitzeschild (20) an der Aussenseite dieser Wandung (12) angebracht ist, **dadurch gekennzeichnet, dass** das Hitzeschild (20) derart vorgeformt ist, dass dieses eine Vielzahl von Perforationen (24) aufweist, welche Perforationen (24) auf der der Behälterwandung (12) zugewandten Seite krallenartige Protrusionen (26) aufweisen, durch welche sich ein Zapfen (28) aus dem die Behälterwandung (12) bildenden Material erstreckt, welcher Zapfen (28) diese krallenartige Protrusionen (26) hintergreift und wobei diese krallenartigen Protrusionen in diesem Material derart eingebettet sind, dass das Hitzeschild (20) mit dem Behälter formschlüssig verbunden ist.

2. Blasgeformter Treibstofftank nach Anspruch 1, **dadurch gekennzeichnet, dass** das Hitzeschild (20) auf einer Fläche von 10 cm² ca. 50 Perforationen aufweist.

3. Blasgeformter Treibstofftank nach einem der Ansprüche 1 oder 2, **dadurch gekennzeichnet, dass** die Perforationen (24) eine eckige, insbesondere eine rechtwinklige Form aufweisen.

4. Blasgeformter Treibstofftank nach einem der Ansprüche 1 bis 3, **dadurch gekennzeichnet, dass** die Perforationen (24) eine Länge von ca. 1 mm bis 3 mm und eine Breite von ca. 0.5 mm bis 1.5 mm aufweisen.

5. Blasgeformter Treibstofftank nach einem der Ansprüche 1 bis 4, **dadurch gekennzeichnet, dass** die krallenartige Protrusionen (26) eine Länge von ca. 0.5 mm bis 1.5 mm aufweisen.

6. Blasgeformter Treibstofftank nach einem der Ansprüche 1 bis 5, **dadurch gekennzeichnet, dass** das Hitzeschild (20) mindestens ein Metallblech aus Aluminium, rostfreiem Stahl oder einem kohlenstoffarmen Stahl umfasst.

7. Blasgeformter Treibstofftank nach Anspruch 6, **dadurch gekennzeichnet, dass** das Metallblech eine Dicke von ca. 0.1 mm bis 0.3 mm aufweist.

8. Blasgeformter Treibstofftank nach einem der Ansprüche 1 bis 7, **dadurch gekennzeichnet, dass** dieser mehrschichtig ausgebildet ist.

9. Verfahren zur Herstellung eines Treibstofftanks (10) mit einem Behälter und einem mit diesem verbundenen Hitzeschild (20), wobei dieses Hitzeschild (20) vorgeformt wird und in eine Formhälfte (42, 44) einer Blasform (40) eingelegt wird, die Blasform geschlossen wird und aus einem Vorformling (48) ein Behälter blasgeformt wird, so dass das Hitzeschild mit dem Behälter des Treibstofftanks (10) verbunden wird, **dadurch gekennzeichnet, dass** dieses Hitzeschild einseitig mit Protrusionen (26) versehen wird, und derart in die Formhälfte (42, 44) der Blasform (40) eingelegt wird, dass dessen Protrusionen in das Innere der Blasform weisen, die Protrusionen (26) des Hitzeschildes (20) beim Blasformen in den Kunststoff eingebettet werden, so dass das Hitzeschild mit dem Behälter des Treibstofftanks (10) formschlüssig verbunden wird.

10. Verfahren nach Anspruch 9, **dadurch gekennzeichnet, dass** das in die Formhälfte (42, 44) der Blasform (40) eingelegte Hitzeschild (20) mit Hilfe von Unterdruck in der Blasform gehalten wird.

## Claims

1. Blow-molded fuel tank for a motor vehicle, whereby the fuel tank (10) comprises a container and a heat shield (20), whereby the container is provided with a wall (12) that is made from a thermoforming, polymer plastic suitable for blow-molding, and the heat shield (20) is provided at the outside of this wall (12), **characterized in that** said heat shield (20) has been preshaped in such a way that it is provided with a plurality of perforations (24), said perforations (24) having on the side facing the container wall (12) claw-like protrusions (26) through which a peg (28) of the material forming the container wall (12) extends, said peg (28) reaching around these claw-like protrusions (26), and whereby these claw-like protrusions are embedded in the material in such a way that a positive fit connection is created between the heat shield (20) and the container.

2. Blow-molded fuel tank as claimed in Claim 1, **characterized in that** the heat shield (20) is provided with about 50 perforations over an area of 10 cm².

3. Blow-molded fuel tank as claimed in one of the Claims 1 or 2, **characterized in that** the perforations (24) are provided with an angular, in particular a rectangular, shape.

4. Blow-molded fuel tank as claimed in one of the Claims 1 to 3, **characterized in that** the perforations (24) have a length of about 1 mm to 3 mm and a width of about 0,5 mm to 1,5 mm.

5. Blow-molded fuel tank as claimed in one of the Claims 1 to 4, **characterized in that** the claw-like protrusions (26) have a length of about 0,5 mm to 1,5 mm.

6. Blow-mlded fuel tank as claimed in one of the Claims 1 to 5, **characterized in that** the heat shield (20) comprises at least one metal sheet of aluminium, stainless steel, or low-carbon steel.

7. Blow-molded fuel tank as claimed in Claim 6, **characterized in that** the metal sheet has a thickness of about 0,1 mm to 0,3 mm.

8. Blow-molded fuel tank as claimed in one of the Claims 1 to 7, **characterized in that** it has a multi-layer construction.

9. Method for producing a fuel tank (10) with a container and a heat shield (20) connected to said container, whereby said heat shield (20) is preshaped and is placed into a mold half (42, 44) of a blow mold (40), the blow mold is closed, and a container is blow-molded from a parison (48) so that the heat shield is connected to the container of the fuel tank (10), **characterized in that** this heat shield is provided on one side with protrusions (26) and is placed into the mold half (42, 44) of the blow mold (40) in such a way that its protrusions point to the inside of the blow mold, whereby the protrusions (26) of the heat shield (20) are embedded into the plastic during the blow-molding, so that a positive fit connection is created between the heat shield and the container of the fuel tank (10).

10. Method as claimed in Claim 9, **characterized in that** the heat shield (20) placed into the mold half (42, 44) of the blow mold (40) is kept in the blow mold with the help of a vacuum.

## Revendications

1. Réservoir de carburant moulé par soufflage pour un véhicule automobile, le réservoir de carburant (10) englobant un récipient et un écran thermique (20), le récipient comportant une paroi (12), composée d'une matière plastique polymère à thermoformage se prêtant au moulage par soufflage, l'écran thermique (20) étant agencé sur le côté externe de cette paroi (12), **caractérisé en ce que** l'écran thermique (20) est préformé de sorte à comporter de multiples perforations (24), ces perforations (24) comportant sur le côté faisant face à la paroi (12) du récipient des protubérances en forme de griffes (26), que traverse un tenon (28) à partir du matériau composant la paroi (12) du récipient, ce tenon (28) s'engageant derrière ces protubérances en forme de griffes (26), ces protubérances en forme de griffes étant noyées dans ce matériau de sorte que l'écran thermique (20) est engagé positivement dans le récipient.

2. Réservoir de carburant moulé par soufflage selon la revendication 1, **caractérisé en ce que** l'écran thermique (20) comporte environ 50 perforations sur une surface de 10 cm².

3. Réservoir de carburant moulé par soufflage selon l'une des revendications 1 ou 2, **caractérisé en ce que** les perforations (24) ont une forme angulaire, en particulier rectangulaire.

4. Réservoir de carburant moulé par soufflage selon l'une des revendications 1 à 3, **caractérisé en ce que** les perforations (24) ont une longueur comprise entre environ 1 mm et 3 mm et une largeur comprise entre environ 0,5 mm et 1,5 mm.

5. Réservoir de carburant moulé par soufflage selon l'une des revendications 1 à 4, **caractérisé en ce que** les protubérances en forme de griffes (26) ont une longueur comprise entre environ 0,5 mm et 1,5 mm.

6. Réservoir de carburant moulé par soufflage selon l'une des revendications 1 à 5, **caractérisé en ce que** l'écran thermique (20) englobe au moins une tôle métallique en aluminium, en acier inoxydable ou en un acier à bas carbone.

7. Réservoir de carburant moulé par soufflage selon la revendication 6, **caractérisé en ce que** la tôle métallique a une épaisseur comprise entre environ 0,1 mm et 0,3 mm.

8. Réservoir de carburant moulé par soufflage selon l'une des revendications 1 à 7, **caractérisé en ce qu'**il comporte plusieurs couches.

9. Procédé de fabrication d'un réservoir de carburant (10) avec un récipient et un écran thermique (20) relié à celui-ci, cet écran thermique (20) étant préformé et inséré dans une moitié de moule (42, 44) d'un moule de soufflage (40), le moule de soufflage étant fermé et un récipient étant moulé par soufflage à partir d'une ébauche (48), de sorte à relier l'écran thermique avec le récipient du réservoir de carburant (10), **caractérisé en ce que** cet écran thermique comporte sur un côté des protubérances (26) et est inséré dans la moitié du moule (42, 44) du moule de soufflage (40) de sorte que les protubérances correspondantes sont orientées vers l'intérieur du moule de soufflage, les protubérances (26) de l'écran thermique (20) étant noyées dans le plastique lors du moulage par soufflage, l'écran thermique étant ainsi engagé positivement dans le récipient du réservoir de carburant (10).

10. Procédé selon la revendication 9, **caractérisé en ce que** l'écran thermique (20) inséré dans la moitié du moule (42, 44) du moule de soufflage (40) est retenu dans le moule de soufflage par dépression.
